# EUROPEAN PATENT SPECIFICATION

(11) **EP 3 784 722 B1**
(45) Date of publication and mention of the grant of the patent: **15.01.2025**
(21) Application number: 19718893.1
(22) Date of filing: 11.04.2019
(51) Int. Cl.: C08J 9/04, C08J 9/12

(54) **FOAMED POLYOLEFIN COMPOSITIONS FOR WIRE AND CABLE COATING**
GESCHÄUMTE POLYOLEFIN-ZUSAMMENSETZUNGEN FÜR DRAHT- UND KABELBESCHICHTUNGEN
COMPOSITIONS MOUSSÉES DE POLYOLÉFINE POUR REVÊTEMENT DE FILS ET DE CÂBLES

(30) Priority: 27.04.2018 US 201862663412 P
(43) Date of publication of application: 03.03.2021
(73) Proprietor: Dow Global Technologies LLC, Midland, MI 48674 (US)
(72) Inventor: PUJARI, Saswati, Collegeville, Pennsylvania 19426 (US); TALREJA, Manish, Collegeville, Pennsylvania 19426 (US); ESSEGHIR, Mohamed, Collegeville, Pennsylvania 19426 (US)
(74) Representative: Boult Wade Tennant LLP
(86) International application number: PCT/US2019/027031
(87) International publication number: WO 2019/209547

(56) References cited:
- EP-A1- 2 910 595
- EP-A2- 0 365 289
- WO-A1-98/02483
- WO-A1-98/21251
- US-A1- 2011 187 018

## Description

### FIELD OF THE INVENTION

This invention relates to foamed wire and cable coating compositions. In one aspect the invention relates to a foamed polyolefin wire and cable coating composition while in another aspect, the invention relates to such compositions comprising a blend of a thermoplastic polymer and a moisture-curable polyolefin.

### BACKGROUND OF THE INVENTION

Producing foams with improved mechanicals (e.g., tensile, elongation, crush strength, etc.) while maintaining good thermal stability and good electrical signal protection properties is desired for a number of power and telecommunication cables. Applications for foamed compositions range from reducing the weight of cables, to enabling cost savings due to the requirement for less material saving, to higher flexibility for easing cable installation. High performance foamed insulations for electrical signal protection exhibiting higher crush and temperature resistance are needed for applications in twisted-pair category data cables. In these applications, there is a new trend for increased use of low voltage signal to power devices through the data cable itself (Power over Ethernet - PoE), resulting in increased operating temperatures of cable bundles. There is concern about the long term ability of the foamed insulation to withstand compressive stresses as the cable temperature rises driven by possible material softening.

WO 98/21251 relates to the silane-grafting of polyolefin materials to enhance the properties of the materials.

### SUMMARY OF THE INVENTION

In one embodiment the invention is a melt blended composition comprising, in weight percent (wt%) based upon the weight of the composition:
(A) 55 to 94.98 wt% of a thermoplastic polymer, wherein the thermoplastic polymer is a polyolefin,
(B) 5 to 44.98 wt% of a moisture curable polymer, wherein the moisture curable polymer is a silane functionalized polyolefin,
(C) 0.01 to 5 wt% of a moisture condensation catalyst, and
(D) 0.01 to 5 wt% of a foaming agent.

In one embodiment the composition is prepared by a process in which the thermoplastic polymer and moisture-curable polyolefin are melt-blended with a moisture condensation catalyst and foaming agent. In one embodiment the composition is foamed after melt blending. In one embodiment the resulting melt-blended, foamed composition is then subjected to a moisture cure step.

### DESCRIPTION OF THE FIGURES

Figure 1 is a rheology curve showing the complex viscosity of comparative and inventive compositions reported in the Examples.
Figure 2 is a rheology curve showing the elasticity (G'/G") of comparative and inventive compositions reported in the Examples.

### DETAILED DESCRIPTION OF THE PREFERRED EMBODIMENT

### Definitions

The numerical ranges disclosed herein include all values from, and including, the lower and upper value. For ranges containing explicit values (e.g., 1 to 7), any subrange between any two explicit values is included (e.g., 1 to 2; 2 to 6; 5 to 7; 3 to 7; 5 to 6; etc.).

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step, or procedure, excepting those that are not essential to operability. The term "consisting of" excludes any component, step, or procedure not specifically delineated or listed. The term "or," unless stated otherwise, refers to the listed members individually as well as in any combination. Use of the singular includes use of the plural and vice versa.

Any reference to the Periodic Table of Elements is that as published by CRC Press, Inc., 1990-1991. Reference to a group of elements in this table is by the new notation for numbering groups.

Unless stated to the contrary, implicit from the context, or customary in the art, all parts and percents are based on weight and all test methods are current as of the filing date of this disclosure.

"Wire" and like terms mean a single strand of conductive metal, e.g., copper or aluminum, or a single strand of optical fiber.

"Cable" and like terms mean at least one wire or optical fiber within a protective insulation, jacket or sheath. Typically, a cable is two or more wires and/or optical fibers bound together, typically in a common protective insulation, jacket or sheath. The individual wires or fibers inside the jacket may be bare, covered or insulated. Combination cables may contain both electrical wires and optical fibers. The cable, etc. can be designed for any voltage application, e.g., low, medium, high, ultra-high, etc. Typical cable designs are -illustrated in USP 5,246,783; 6,496,629 and 6,714,707.

"Polymer" means a compound prepared by reacting (i.e., polymerizing) monomers, whether the same or different. The generic term polymer thus embraces the term "homopolymer", usually employed to refer to polymers prepared from only one type of monomer, and the term "interpolymer" as defined below.

"Interpolymer" and "copolymer" mean a polymer prepared by the polymerization of at least two different types of monomers. These generic terms include both classical copolymers, i.e., polymers prepared from two different types of monomers, and polymers prepared from more than two different types of monomers, e.g., terpolymers, tetrapolymers, etc.

"Olefin" and like terms mean hydrocarbons (compounds containing hydrogen (H) and carbon (C)) whose molecules contain a pair of carbon atoms linked together by a double bond.

"Polyolefin" and like terms mean a class of polymers produced from a simple olefin (also called an alkene with the general formula CₙH₂ₙ) as a monomer. For example, polyethylene is the polyolefin produced by polymerizing the olefin ethylene. Polypropylene is the polyolefin produced by polymerizing the olefin propylene.

"Polyethylene", "ethylene polymer" and like terms mean a polymer containing units derived from ethylene. Ethylene polymers typically comprise at least 50 mole percent (mol%) units derived from ethylene.

"Silane-functionalized polyolefin" and like terms mean an olefin polymer comprising silane functionality. The silane functionality is the result of either grafting hydrolysable unsaturated silane, e.g., a vinyl trialkoxy silane, onto an olefin, e.g., ethylene, polymer backbone as described, for example, in USP 3,646,155 or 6,048,935, or the copolymerization of a hydrolysable unsaturated silane with an olefin of which SI-LINK^{™} DFDA-5451, a copolymer of ethylene and vinyl trimethoxy silane and available from DowDuPont, is an example.

"Blend," "polymer blend" and like terms mean a combination of two or more polymers. Such a blend may or may not be miscible. Such a combination may or may not be phase separated. Such a combination may or may not contain one or more domain configurations, as determined from transmission electron spectroscopy, light scattering, x-ray scattering, and any other method known in the art.

"Composition" and like terms mean a mixture or blend of two or more components. For example, in the context of preparing a silane-grafted ethylene polymer, a composition would include at least one ethylene polymer, at least one vinyl silane, and at least one free radical initiator. In the context of preparing a cable sheath or other article of manufacture, a composition would include an ethylene-vinylsilane copolymer, a catalyst cure system and any desired additives such as lubricants, fillers, and anti-oxidants.

"Ambient conditions" and like terms mean temperature, pressure and humidity of the surrounding area or environment of an article. The ambient conditions of a typical office building or laboratory include a temperature of 23°C and atmospheric pressure.

"Grafting conditions" and like terms mean temperature, pressure, humidity, residence time, agitation, etc., at which a hydrolysable unsaturated silane will graft, i.e., add to or combine with, a polyolefin when the two are contacted with one another. Grafting conditions can vary with the nature of the silane and polyolefin, and the presence or absence of a catalyst.

"Catalytic amount" means an amount of catalyst necessary to promote a reaction, e.g., the grafting of a silane compound to a polyolefin, or the crosslinking of an ethylene-vinylsilane polymer, etc., at a detectable level, preferably at a commercially acceptable level.

"Crosslinked", "cured" and similar terms mean that the polymer, before or after it is shaped into an article, was subjected or exposed to a treatment which induced crosslinking and has xylene or decalene extractables of less than or equal to 90 weight percent (i.e., greater than or equal to 10 weight percent gel content). The phase of the process during which the crosslinks are created is commonly referred to as the "cure phase" and the process itself is commonly referred to as "curing".

"Crosslinkable", "curable" and like terms means that the polymer, before or after shaped into an article, is not cured or crosslinked and has not been subjected or exposed to treatment that has induced substantial crosslinking although the polymer comprises additive(s) or functionality which will cause or promote substantial crosslinking upon subjection or exposure to such treatment (e.g., exposure to water).

"Thermoplastic polymer" and like terms mean a linear or branched polymer that can be repeatedly softened and made flowable when heated and returned to a hard state when cooled to room temperature. In the context of this invention, the thermoplastic polymer generally has an elastic modulus greater than 10,000 psi (68.95 MPa) using the method of ASTM D638-72. In addition, thermoplastic polymers can be molded or extruded into articles of any predetermined shape when heated to the softened state.

"Thermoset polymer", "thermosetting polymers" and like terms mean that once cured, the polymer cannot be softened, i.e., further shaped, by heat. Thermosetting polymers, once cured, are space network polymers and are highly crosslinked to form rigid three-dimensional molecular structures.

"Pellet" and like terms mean small particles typically created by compressing a powder or granular material, or by chopping strands created during extrusion of a melt through a die. Pellet shapes and sizes can vary widely.

"Moisture-curable polymer" and like terms mean a polymer that can be crosslinked upon exposure to moisture. The amount or degree of crosslinking will depend upon, among other things, (1) the curing conditions, e.g., temperature, amount and form of water (bath, mist, etc.), residence time, presence or absence of catalyst and if present, the kind and amount of catalyst, etc., and (2) the moisture-curable polymer itself. In the context of a polyolefin polymer comprising a hydrolyzable silane group, the silane group is first hydrolyzed upon exposure to water in which the hydrolyzable silane group is converted to a silanol group and an alcohol is formed as a by-product. The silanol groups are then crosslinked through a condensation reaction. Typically both the first and second steps are catalyzed with a condensation catalyst.

"Melt blending" is a process in which at least two components are combined or otherwise mixed together, and at least one of the components is in a melted state. The melt blending may be accomplished by one or more of various know processes, e.g., batch mixing, extrusion blending, and extrusion molding. "Melt blended" compositions are compositions which were formed through the process of melt blending.

"Coating" and like terms mean the application in any manner, e.g., contacting, depositing, "salting out", precipitating, etc., of one material, i.e., the applied material, to another material, i.e., the base material, such that the applied and base materials adhere to one another. "Coating" also refers to the applied material that has been contacted, or deposited, etc., to the base material. In the context of wire and cable, the coating is typically a polymer that has been extruded over and in contact with a wire or previously coated wire or cable, such as a semiconductor layer, or an insulation layer, or an outer protective jacket.

"Foam" and like terms mean a solid or liquid with many trapped gas bubbles. In the context of this invention, the gas bubbles trapped in the solid or liquid are typically generated through the use of a foaming agent. "Non-foam" and like terms mean a solid or liquid without any significant amount of trapped gas bubbles. In the context of this invention, a non-foam is produced in the absence of a foaming agent or if a foaming agent is present, then it (i.e., the foaming agent) is not active. In the context of this invention, "non-foam" and "solid" are used synonymously.

"Foaming agent" and like terms mean a material that facilitates formation of foam such as a surfactant or a blowing agent. A surfactant, when present in small amounts, reduces surface tension of a liquid or increases its colloidal stability by inhibiting coalescence of bubbles. A blowing agent is a gas that forms the gaseous part of the foam.

"Peroxide-treated" and like terms mean that a thermoplastic polymer or composition has been contacted with only enough peroxide and only under conditions that will modify the rheology of the polymer or composition but not to the extent that the polymer or composition is crosslinked to a degree that it is no longer thermoplastic.

### Thermoplastic Polymer

Any polymer that will soften upon heating is a thermoplastic polymer. Such polymers include polyolefins.

The thermoplastic polymer is a polyolefin. The polyolefin resins useful in the practice of this invention include both polyolefin homopolymers and interpolymers. Examples of polyolefin homopolymers are the homopolymers of ethylene and propylene. Examples of the polyolefin interpolymers are the ethylene/alpha-olefin interpolymers and the propylene/alpha-olefin interpolymers. The alpha-olefin is preferably a C3-20 linear, branched or cyclic alpha-olefin (for the propylene/alpha-olefin interpolymers, ethylene is considered an alpha-olefin). Examples of C3-20 alpha-olefins include propene, 1-butene, 4-methyl-1-pentene, 1-hexene, 1-octene, 1-decene, 1-dodecene, 1-tetradecene, 1-hexadecene, and 1-octadecene. The alpha-olefins can also contain a cyclic structure such as cyclohexane or cyclopentane, resulting in an alpha-olefin such as 3-cyclohexyl-1-propene (allyl cyclohexane) and vinyl cyclohexane. Although not alpha-olefins in the classical sense of the term, for purposes of this invention certain cyclic olefins, such as norbornene and related olefins, are alpha-olefins and can be used in place of some or all of the alpha-olefins described above. Similarly, styrene and its related olefins (for example, alpha-methylstyrene, etc.) are alpha-olefins for purposes of this invention. Illustrative polyolefin copolymers include ethylene/propylene, ethylene/butene, ethylene/1-hexene, ethylene/1-octene, and ethylene/styrene. Illustrative terpolymers include ethylene/propylene/1-octene, ethylene/propylene/butene, ethylene/butene/1-octene, and ethylene/butene/styrene. The copolymers can be random or blocky.

The polyolefin resins can also comprise one or more functional groups such as, but are not limited to, halogen and an unsaturated ester or acid, and many of these functionalized polyolefins are well known and can be prepared by conventional high-pressure techniques. Chlorine is a typical halogen (e.g., PVC), and the unsaturated esters can be alkyl acrylates, alkyl methacrylates, or vinyl carboxylates. The alkyl groups can have 1 to 8 carbon atoms and preferably have 1 to 4 carbon atoms. The carboxylate groups can have 2 to 8 carbon atoms and preferably have 2 to 5 carbon atoms. The portion of the copolymer attributed to the ester comonomer can be in the range of 1 up to 50 percent by weight based on the weight of the copolymer. Examples of the acrylates and methacrylates are ethyl acrylate, methyl acrylate, methyl methacrylate, t-butyl acrylate, n-butyl acrylate, n-butyl methacrylate, and 2-ethylhexyl acrylate. Examples of the vinyl carboxylates are vinyl acetate, vinyl propionate, and vinyl butanoate. Examples of the unsaturated acids include acrylic acids or maleic acids.

Examples of ethylenic polymers useful in the practice of this invention include high density polyethylene (HDPE); medium density polyethylene (MDPE); low density polyethylene (LDPE); very low density polyethylene (VLDPE), e.g., FLEXOMER^{™} ethylene/1-hexene polyethylene by The Dow Chemical Company); homogeneously branched, linear ethylene/alpha-olefin copolymers (e.g. TAFMER^{™} by Mitsui Petrochemicals Company Limited and EXACT^{™} by DEX-Plastomers); homogeneously branched, substantially linear ethylene/alpha-olefin polymers (e.g., AFFINITY^{™} polyolefin plastomers and ENGAGE^{™} polyolefin elastomers available from The Dow Chemical Company); and ethylene block copolymers (INFUSE^{™} also available from The Dow Chemical Company). The substantially linear ethylene copolymers are more fully described in USP 5,272,236; 5,278,272 and 5,986,028, and the ethylene block copolymers are more fully described in USP 7,579,408; 7,355,089; 7,524,911; 7,514,517; 7,582,716 and 7,504,347.

Olefinic interpolymers of particular interest for use in the practice of this invention are LDPE, linear low density polyethylene (LLDPE) and HDPE. These ethylenic copolymers are commercially available from a number of difference sources including The Dow Chemical Company under such trademarks as DOWLEX^{™}, ATTANE^{™} and FLEXOMER^{™}; Equistar/LyondellBasell under such trademarks as PETROTHENE^{™}, Nova Chemical Company under such trademarks as NOVAPOL^{™}, and SCLAIR^{™},; and ExxonMobil Chemical Company under such trademarks as EXCEED^{™}, EXACT^{™} and ENABLE^{™}.

The polyolefins useful in the practice of this invention also include propylene, butene and other alkene-based copolymers, e.g., copolymers comprising a majority of units derived from propylene and a minority of units derived from another alpha-olefin (including ethylene). Exemplary propylene polymers useful in the practice of this invention include the VERSIFY^{™} polymers available from The Dow Chemical Company, and the VISTAMAXX^{™} polymers available from ExxonMobil Chemical Company.

The thermoplastic polymers, particularly the thermoplastic polyolefin polymers, typically have a density of 0.856, or 0.865, or 0.870, to 0.975, or 0.950, or 0.920, grams per cubic centimeter (g/cm³). Density is measured by the procedure of ASTM D-792.

The thermoplastic polymers, particularly the thermoplastic olefin polymers, typically have a melt index 0.01, or 0.1, or 0.5, to 1,000, or 100, or 10, or 1.0, grams per 10 minutes (g/10 min). Melt index for ethylene-based polymers is measured by the procedure of ASTM D-1238 (190°C/2.16 kg) and for propylene-based polymers by the procedure of ASTM D-1238 (230°C/2.16 kg).

Blends of any of the above olefinic polymers can also be used in this invention, and the olefin polymers can be blended or diluted with one or more other thermoplastic polymers to the extent that, in a preferred mode, the olefin polymers of this invention constitute at least about 50, preferably at least about 75 and more preferably at least about 80, weight percent of the thermoplastic polymer component of the blend. In a less preferred mode and depending on other properties that may be sought, the olefin polymer content may be less than 50% of the thermoplastic polymer component. In one embodiment the thermoplastic polymer is void or free of any olefinic polymer.

The amount of thermoplastic polymer in the composition of this invention, i.e., in the melt blend of a thermoplastic polymer, a moisture-curable polyolefin, a moisture condensation catalyst, and a foaming agent, is at least 55, or 60, or 70, weight percent (wt%) based on the total weight of the composition. The maximum amount of thermoplastic polymer in the composition does not exceed 94.98, or 90, or 85, or 80, wt% based on the weight of the composition.

### Moisture Curable Polyolefin

The moisture curable polyolefin used in the practice of this invention is a polyolefin with silane functionality. The silane functionality can be introduced into or onto the polyolefin through copolymerization and/or grafting.

Any silane that will effectively copolymerize with an olefin, e.g., ethylene, or graft to and crosslink an olefin polymer, can be used in the practice of this invention, and those described by the following formula are exemplary: 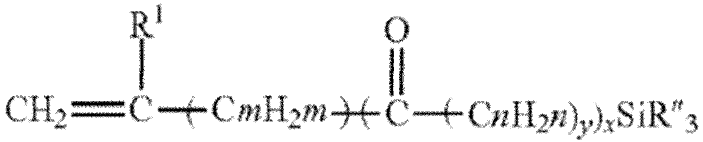 in which R₁ is a hydrogen atom or methyl group; x and y are 0 or 1 with the proviso that when x is 1, y is 1; m and n are independently an integer from 0 to 12 inclusive, preferably 0 to 4, and each R" independently is a hydrolyzable organic group such as an alkoxy group having from 1 to 12 carbon atoms (e.g. methoxy, ethoxy, butoxy), aryloxy group (e.g. phenoxy), araloxy group (e.g. benzyloxy), aliphatic acyloxy group having from 1 to 12 carbon atoms (e.g. formyloxy, acetyloxy, propanoyloxy), amino or substituted amino groups (alkylamino, arylamino), or a lower alkyl group having 1 to 6 carbon atoms inclusive, with the proviso that not more than one of the three R groups is an alkyl. Such silanes may be copolymerized with the olefin in a reactor, such as a high pressure process. Such silanes may also be grafted to a suitable olefin polymer by the use of a suitable quantity of organic peroxide, either before or during a shaping or molding operation. Additional ingredients such as heat and light stabilizers, pigments, etc., also may be included in the formulation. Also included are silanes that add to unsaturation in the polymer via free radical processes such as mercaptopropyl trialkoxysilane.

Suitable silanes include unsaturated silanes that comprise an ethylenically unsaturated hydrocarbyl group, such as a vinyl, allyl, isopropenyl, butenyl, cyclohexenyl or gamma-(meth)acryloxy allyl group, and a hydrolyzable group, such as, for example, a hydrocarbyloxy, hydrocarbonyloxy, or hydrocarbylamino group. Examples of hydrolyzable groups include methoxy, ethoxy, formyloxy, acetoxy, proprionyloxy, and alkyl or arylamino groups. Preferred silanes are the unsaturated alkoxy silanes which can be grafted onto the polymer or copolymerized in-reactor with other monomers (such as ethylene and acrylates). These silanes and their method of preparation are more fully described in USP 5,266,627 to Meverden, et al. Vinyl trimethoxy silane (VTMS), vinyl triethoxy silane, vinyl triacetoxy silane, gamma-(meth)acryloxy propyl trimethoxy silane and mixtures of these silanes are the preferred source of the silane functionality of the moisture curable polymers used in the practice of this invention.

The amount of silane functionality in the moisture curable can vary widely depending upon the nature of the polymer, the silane, the processing or reactor conditions, the grafting or copolymerization efficiency, the ultimate application, and similar factors, but typically the polymer contains at least 0.5, preferably at least 0.7, weight percent. Considerations of convenience and economy are two of the principal limitations on the maximum amount of silane functionality in the moisture curable polymer, and typically the maximum amount of such functionality does not exceed 5, preferably it does not exceed 3, weight percent.

The silane is grafted to the polymer by any conventional method, typically in the presence of a free radical initiator, e.g. a peroxide or azo compound, or by ionizing radiation, etc. Organic initiators are preferred, such as any one of the peroxide initiators, for example, dicumyl peroxide, di-tert-butyl peroxide, t-butyl perbenzoate, benzoyl peroxide, cumene hydroperoxide, t-butyl peroctoate, methyl ethyl ketone peroxide, 2,5-dimethyl-2,5-di(t-butyl peroxy)hexane, lauryl peroxide, and tert-butyl peracetate. A suitable azo compound is 2,2-azobisisobutyronitrile. The amount of initiator can vary, but it is typically present in an amount of at least 0.01, preferably at least 0.03, parts per hundred resin (phr). Typically, the initiator does not exceed 0.15, preferably it does not exceed about 0.10, phr. The weight ratio of silane compound to initiator also can vary widely, but the typical silane: initiator weight ratio is between 10: 1 to 500:1, preferably between 18:1 and 250:1. As used in parts per hundred resin or phr, "resin" means the olefinic polymer.

While any conventional method can be used to graft the silane to the polyolefin polymer, one preferred method is blending the two with the initiator in the first stage of a reactor extruder, such as a BUSS^{™} kneader. The grafting conditions can vary, but the melt temperatures are typically between 160 and 260°C, preferably between 190 and 230°C, depending upon the residence time and the half-life of the initiator.

Copolymerization of vinyl trialkoxysilane with the olefin and other monomers may be done in a high-pressure reactor that is used in the manufacture of olefin homopolymers and copolymers with vinyl acetate and acrylates.

The amount of moisture curable polymer in the composition of this invention, i.e., in the melt blend of a thermoplastic polymer, a moisture-curable polyolefin, a moisture condensation catalyst, and a foaming agent, is at least 5, or 10, weight percent (wt%) based on the total weight of the composition. The maximum amount of moisture curable polymer in the composition does not exceed 44.98, or 40, or 35, or 30, or 25, wt% based on the weight of the composition.

The olefin polymers, particularly the silane containing ethylene polymers, have, a density of 0.856, or 0.870, or 0.900, to 0.925, or 0.950, or 0.975, grams per cubic centimeter (g/cm³). Density is measured by the procedure of ASTM D-792. These, e.g., vinyltrimethoxysilane, contain 0.25, or 0.75, or 1.25 to 1.57, or 2.25 or 3% silane by weight.

The olefin polymers, particularly the ethylene polymers, typically have a melt index 0.01, or 0.1, or 0.5, to 1,000, or 100, or 10, or 1.0 grams per 10 minutes (g/10 min). Melt index for ethylene-based polymers is measured by the procedure of ASTM D-1238 (190°C/2.16 kg) and for propylene-based polymers by the procedure of ASTM D-1238 (230°C/2.16 kg).

In one embodiment the melt index of the thermoplastic polymer is less than the melt index of the moisture curable polymer. In one embodiment the melt index of the thermoplastic polymer is less than 90, or 80, or 70, or 60, or 50, or 40, or 30, or 20, or 10, percent of the melt index of the moisture curable polymer. This difference in melt index between the two polymers facilitates good mixing of the two polymers.

### Moisture Condensation Catalyst

Moisture condensation catalysts, or simply crosslinking catalysts, include the Lewis and Brönsted acids and bases. Lewis acids are chemical species that can accept an electron pair from a Lewis base. Lewis bases are chemical species that can donate an electron pair to a Lewis acid. Lewis acids that can be used in the practice of this invention include the tin carboxylates such as dibutyl tin dilaurate (DBTDL), dimethyl hydroxy tin oleate, dioctyl tin maleate, di-n-butyl tin maleate, dibutyl tin diacetate, dibutyl tin dioctoate, stannous acetate, stannous octoate, and various other organo-metal compounds such as lead naphthenate, zinc caprylate and cobalt naphthenate. DBTDL is a preferred Lewis acid. Lewis bases that can be used in the practice of this invention include, but are not limited to, the primary, secondary and tertiary amines. In one embodiment, the condensation catalyst is sulfonic acid.

The minimum amount of crosslinking catalyst used in the practice of this invention is a catalytic amount. Typically this amount is at least 0.01, preferably at least 0.02 and more preferably at least 0.03, weight percent (wt%) of the combined weight of silane-functionalized polyolefin and catalyst. The only limit on the maximum amount of crosslinking catalyst in the composition is that imposed by economics and practicality (e.g., diminishing returns), but a general maximum comprises less than 5, preferably less than 3 and more preferably less than 2, wt% of the combined weight of moisture curable polymer and catalyst.

The silane crosslinking catalyst is typically added to the thermoplastic polymer and/or moisture curable polymer in the form of a masterbatch but whatever the mode of its addition to the other polymers of the inventive composition, it is present during the melt blending of the thermoplastic polymer and moisture curable polymer. This melt blending is conducted using standard techniques and equipment, e.g., internal batch mixers, reaction-extruders, etc.

### Foaming Agent

The foaming agent used in the practice of this invention is typically a blowing agent. Suitable blowing agents include physical blowing agents such as various low-boiling chlorofluorocarbons, fluorocarbons and hydrocarbons, and carbon dioxide, nitrogen and the like. Fluorocarbons and hydrocarbons having low or zero global warming and ozone-depletion potentials are preferred among the physical blowing agents. Chemical blowing agents that do not decompose or react under the conditions of which the thermoplastic polymer and moisture-curable polyolefin are melt blended are also useful. Such chemical blowing agents decompose during the foaming step (which follows the melt blending step). A common chemical blowing agent is azodicarbonamide (ADC). Chemical blowing agents may also be used in combination with one or more physical blowing agents, e.g., carbon dioxide, air, nitrogen or argon.

The minimum amount of foaming agent used in the practice of this invention is at least 0.01, preferably at least 0.04 and more preferably at least 0.05, weight percent (wt%) based on the weight of the composition, i.e., thermoplastic polymer, moisture curable polymer, catalyst and foaming agent. The only limit on the maximum amount of foaming agent in the composition is that imposed by economics and practicality (e.g., diminishing returns), but a general maximum comprises less than 5, preferably less than 3 and more preferably less than 2, wt% based on the weight of the composition.

In one embodiment a surfactant is also used in the production of the foams. A wide variety of silicone surfactants can be used in making the present foams. Examples of such silicone surfactants are commercially available under the tradenames TEGOSTAB^{™} (Th. Goldschmidt and Co.), NIAX^{™} (GE OSi Silicones) and DABCO^{™} (Air Products and Chemicals, Inc.). For example, DABCO^{™} DC 5160 is a suitable silicon surfactant available from Air Products and Chemicals, Inc. The amount of surfactant used will vary somewhat according to the particular application and surfactant that is used, but in general can be between 0.1 and 2.0 weight percent based on the total weight of the composition.

### Fillers and Additives

The compositions of this invention can comprise one or more filler and/or additive. The amount of filler present should preferably not exceed an amount that would cause unacceptably large degradation of the mechanical and/or chemical properties of the moisture cured composition. Typically, the amount of filler present is between 2 and 35, preferably between 5 and 20, weight percent (wt%) based on the weight of the composition. Representative fillers include kaolin clay, magnesium hydroxide, silica, calcium carbonate and carbon blacks either as reinforcement agents or for UV stabilization. The filler may or may not have flame retardant properties. In a preferred embodiment of this invention in which filler is present, the filler is coated with a material that will prevent or retard any tendency that the filler might otherwise have to interfere with the silane cure reaction. Stearic acid is illustrative of such a filler coating. Filler and catalyst are selected to avoid any undesired interactions and reactions, and this selection is well within the skill of the ordinary artisan.

The compositions of this invention can also contain additives such as, for example, antioxidants (e.g., hindered phenols such as, for example, IRGANOX^{™} 1010 available from Ciba Specialty Chemicals), phosphites (e.g., IRGAFOS^{™} 168 available from Ciba Specialty Chemicals), UV stabilizers, cling additives, light stabilizers (such as hindered amines), plasticizers (such as dioctylphthalate or epoxidized soy bean oil), metal deactivators, scorch inhibitors, mold release agents, tackifiers (such as hydrocarbon tackifiers), waxes (such as polyethylene waxes), nucleating agents (such as HYPERFORM^{™} HPN-20E available from Milliken Chemicals, and PTFE from DowDuPont), processing aids (such as oils, organic acids such as stearic acid, metal salts of organic acids), oil extenders (such as paraffin oil and mineral oil), colorants or pigments to the extent that they do not interfere with desired physical or mechanical properties of the compositions of the present invention. These additives are used in amounts known to those versed in the art.

### Compounding and Fabrication

Compounding of the thermoplastic polymer, moisture curable polymer, condensation catalyst, foaming agent, and optional filler and additives can be performed by standard means known to those skilled in the art. Examples of compounding equipment are internal batch mixers, such as a BANBURY^{™} or BOLLING^{™} internal mixer. Alternatively, continuous single or twin screw mixer or extruders can be used, such as a FARREL^{™} continuous mixer, a WERNER AND PFLEIDERER^{™} twin screw mixer, or a BUSS^{™} kneading continuous extruder. The type of mixer utilized, and the operating conditions of the mixer, will affect properties of the composition such as viscosity, foam density, volume resistivity, and extruded surface smoothness.

The components of the composition are typically mixed at a temperature and for a length of time sufficient to fully homogenize the mixture but insufficient to cause the material to gel or foam. The catalyst and/or foaming agent is typically added to the silane-grafted olefin polymer but it can be added before, with or after the additives, if any. Typically, the components are mixed together in a melt-mixing device. The mixture is then foamed and shaped into the final article. In one embodiment the mixture is first pelletized, then subjected to a rheology-modification step, and then foamed. The temperature of compounding and article fabrication should be above the melting point of the silane-grafted olefin polymer but below 250°C.

In some embodiments, either or both of the catalyst, foaming agent and the additives are added as a pre-mixed masterbatch. Such masterbatches are commonly formed by dispersing the catalyst, foaming agent and/or additives into an inert plastic resin, e.g., a low density polyethylene. Masterbatches are conveniently formed by melt compounding methods.

In one embodiment, one or more of the components are dried before compounding, or a mixture of components is dried after compounding, to reduce or eliminate potential scorch that may be caused from moisture present in or associated with the component, e.g., filler.

In one embodiment of the invention, the foam structure is a closed cell structure, the foam density dependent upon the type of polymer system. The foaming level can vary from 1 to 90%, or from 1 to 70%, or from 1 to 50%, or from 1 to 40%, or less, depending upon the desired mechanical and/or other properties of the final foam product. Foam cell size can also vary, e.g., 0.03, or 0.02, or 0.01, or 0.005, or less, millimeters (mm).

### Articles of Manufacture

In one embodiment, the foamed composition of this invention can be applied to a cable as a protective jacket or insulation layer in known amounts and by known methods (for example, with the equipment and methods described in USP 5,246,783 and 4,144,202). Typically, the composition is prepared in a reactor-extruder equipped with a cable-coating die and after the components of the composition are formulated, the composition is extruded over the cable as the cable is drawn through the die. Cure may begin in the reactor-extruder.

While not necessary or preferred, the shaped article can be exposed to either or both elevated temperature and external moisture and if an elevated temperature, it is typically between ambient and up to but below the melting point of the polymer for a period of time such that the article reaches a desired degree of crosslinking. The temperature of any post-shaping cure should be above 0°C.

Other articles of manufacture that can be prepared from the polymer compositions of this invention include fibers, ribbons, sheets, tapes, tubes, pipes, weather-stripping, seals, gaskets, hoses, foams, footwear and bellows. These articles can be manufactured using known equipment and techniques.

The invention is described more fully through the following examples. Unless otherwise noted, all parts and percentages are by weight.

### EXAMPLES

### Test Methods

Samples that are measured for density are prepared according to ASTM D 1928. Samples are pressed at 374°F (190°C) and 206.8 MPa (30,000 psi) for 3 minutes, and then at 70°F. (21°C) and 206.8 MPa (30,000 psi) for 1 minute. Density measurements are made within one hour of sample pressing using ASTM D792, Method B.

Melt index, or 12, is measured for ethylene-based polymers according to ASTM D 1238, Condition 190°C/2.16 kg, and is reported in grams eluted per 10 minutes (g/10 min). Melt flow rate, or MFR, is measured for propylene-based polymers according to ASTM D 1238, Condition 230°C/2.16 kg, and is reported in g/10 min.

Tensile and elongation were measured according to ISO 527-2, test specimen type 5A.

Dynamic Oscillatory Shear (DOS) Rheology (frequency sweep 100-0.1 rad/s) was measured on the comparative examples at 190°C (on plaques molded from pellets of unmodified base resin and peroxide-treated polymer material not containing any foaming agent), and on the inventive examples on plaques molded from pellets after the cure step and from material not containing any foaming agent.

Wire smoothness test: The surface smoothness of a conductor jacket is measured according to ANSI 1995 via a SURFTEST^{™} SV-400 Series 178 Surface Texture Measuring Instrument. A wire sample is placed in a V-Block and the stylus (10 urn) is lowered down to a specific start position (about 1 gram force is applied to wire). At a fixed rate of 2 millimeters per second the stylus is moved in the transverse direction taking measurements. Four readings per wire sample and four samples are tested which are then averaged with values reported in micron-inch (1 inch = 2.54 cm).

Foam density is measured according to ASTM D-792.

Foam level is a percentage of foaming. The foamed jacket is stripped from the wire and its density measured per ASTM D-792. The foaming percentage is calculated as the percentage loss of density compared to the neat resin (i.e., an unfoamed and non-peroxided-treated resin), as described in the Materials section below.

### Materials

DFH 2065 is a linear low density polyethylene (LLDPE) in granular form with a density of 0.920 g/cm³ and a melt index of 0.65 g/10 min (190°C/2.16 kg).

DFNA 2065 is a linear low density polyethylene (LLDPE) in pellet form with a density of 0.920 g/cm³ and a melt index of 0.65 g/10 min (190°C/2.16 kg) available from The Dow Chemical Company.

DFNA-4580 is a high density polyethylene (HDPE) with a density of 0.945 g/cm³ and a melt index of 0.8 g/10 min available from The Dow Chemical Company.

DOWLEX^{™} GM 8480F is an LLDPE with a density of 0.917 g/cm³ and a melt index of 3 g/10 min (190°C/2.16 kg) available from The Dow Chemical Company.

SI-LINK^{™} DFDA-5451 is a copolymer of ethylene and 1.5% vinyl trimethoxy silane (VTMS) with a density of 0.922 g/cc and a melt index (MI) of 1.5 g/10 min, available from The Dow Chemical Company.

SI-LINK^{™} DFDB-5480 NT catalyst masterbatch contains low density polyethylene (0.925 g/cc, MI of 3.0 g/10 min) plus 1.7 wt% dibutyl tin dilaurate.

SI-LINK^{™} DFDA-5481 NT catalyst masterbatch contains DFH-2065 plus 2.6 wt% dibutyl tin dilaurate.

BI 0340 masterbatch contains a linear low density polyethylene (0.924 g/cc, 20 g/10 min MI) plus 49 wt% azodicarbonamide blowing agent. This blowing agent masterbatch is produced by DowDuPont.

AXELERON^{™} GP A-0037 BK CPD carbon black masterbatch with a density of 1.18 g/cc and contains an LLDPE and 45 wt% carbon black. The masterbatch is available from DowDuPont.

TRIGONOX^{™} 101 is an organic peroxide with the chemical name of 2,5-dimethyl-2,5-di(tert-butylperoxy)hexane and available from Akzo Nobel N.V.

### Procedure

Peroxide-modified LLDPE Melt Mixing/Melt Compounding: The resin batches were prepared using a 250cc BRABENDER^{™} model Prep Mixer/Measuring Head laboratory electric batch mixer equipped with Cam Blades. The BRABENDER^{™} Mixer/Measuring Head is a 3-piece design consisting of two heating zones with a capacity of 250 milliliters (ml) depending on mixer blade configuration. The formulation mixed per batch is 280 grams (g) of resin, 0.15 g of peroxide (TRIGONOX^{™} 101) and 1.5 g of blowing agent masterbatch (MB). Each mixing run began by first adding the LLDPE resin into the mixing bowl while the blades were rotating at 20 revolutions per minute (rpm). The process temperature set point for both zones was 130°C. To activate the peroxide the temperature was increased to 200°C. After the torque reading became steady indicating all peroxide had reacted, the temperature was lowered to 130°C, and once achieved, the blowing agent added. The duration of the mixing cycle was 25 minutes. The molten material was then collected and placed between two MYLAR^{™} polyester sheets and compress molded at room temperature into a flat pancake, then cut into small pieces for wireline extrusion.

Blends of LLDPE and Silane-LDPE Copolymer: Silane copolymer DFDA-5451 was first dried before melt blending it with LLDPE, tin catalyst masterbatch DFDA-5481 (2.6% DBTDL) and azodicarbonamide masterbatch in a 250cc BRABENDER^{™} mixing bowl at a temperature of 130°C. The blend was then pelletized for feeding into a wireline extruder. The pellets were then cured in a humidity chamber for 14 days before extrusion foaming. Humidity chamber conditions were set to 50°C and 75% humidity.

Mini-wireline Extrusion: Wire samples were extruded on a mini-wireline on 14 gauge copper wire, wall thickness of 762 µm (30 mils). The screw speed was set to 70 rpm and the take-off speed at 4.11 m/min (13.5 feet per minute (ft/min)). The extruder temperature profile was set at 180/190/200/190°C in zones 1, 2, 3 and 4, respectively.

Tensile and Elongation Measurements: Tensile test specimens were prepared by removing the copper conductor from six-inch lengths of wire. The wire samples was first conditioned for 48 hours in a controlled environment at 23°C (+/-2°C) (73.4°F (+/-3.6°F)) with 50% (+/-5%) relative humidity (RH). The tensile testing was conducted on a INSTRON^{™} Renew 4201 65/16 and 4202 65/16 apparatus using a 50.8 cm (20 inch) per minute jaw separation speed.

The compound formulations are reported in Table 1.

**Table 1**

| Compound Formulations | | | |
|---|---|---|---|
| **Sample description** | **CE-1** | **CE-2** | **CE-3** |
| DFNA-2065 (LLDPE, 0.920 density, 0.65 MI) | 100 | 99.50 | 99.45 |
| TRIGONOX^{™} 101 peroxide | | | 0.05 |
| BI 0340 (45% Azodicarbonamide MB) | | 0.50 | 0.50 |
| Total | 100 | 100 | 100 |

| | **IE-1** | **IE-2** |
|---|---|---|
| **Sample description** | **wt%** | **wt%** |
| DFH 2065 LLDPE (0.920 density, 0.65 MI) | 84.5 | 74.5 |
| DFDA-5451 (LDPE VTMS copolymer) | 10.0 | 20.0 |
| DFDA-5481 (Tin dilaurate catalyst MB) | 5.0 | 5.0 |
| BI 0340 (45% Azodicarbonamide MB) | 0.5 | 0.5 |
| Total | 100 | 100 |

### Rheology

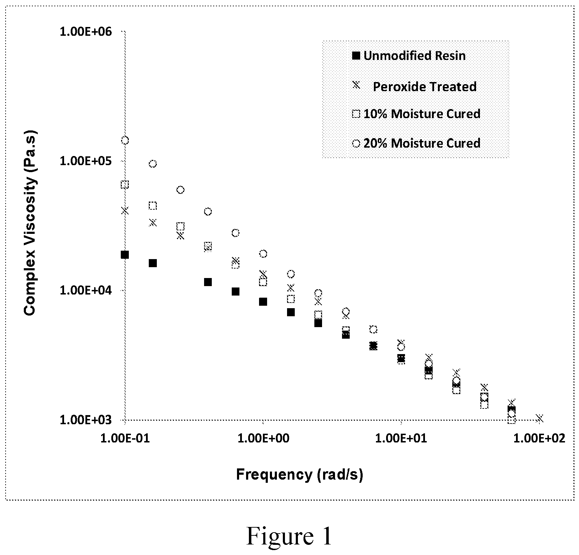

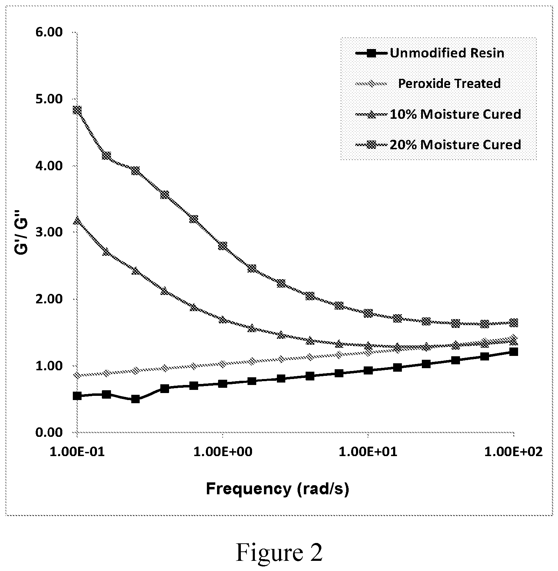

As shown in Table 2 and Figures 1 and 2 at 100 radians per second (rad/s), the blends of this invention exhibit higher viscosity at low shear rates, indicative of increased melt strength, higher than what is achieved via uniform peroxide treatment of the entire composition. By contrast, at high shear rates where lower viscosities are desirable for processability, the viscosities of the compounds of this invention are not significantly affected and lower than the peroxide-treated composition, even at such low peroxide level of 500 ppm. Increasing the amount of peroxide increases the viscosity substantially. This approach to increasing melt strength can be useful in foaming lower melt strength materials such HDPE and polypropylene (PP) among others. The method of this invention also has advantages over the peroxide approach as it eliminates issues related to the need to achieve high melt temperature to ensure peroxide decomposition while facing the decomposition of the chemical blowing agents, thus requiring a two-step compounding process. The inventive method, in contrast, is essentially unrestricted and enables compounding at temperatures convenient for good melt mixing and well below the decomposition temperatures of the blowing agent, since the cure step takes place on the pelleted material, i.e., post-compounding.

**Table 2**

| Rheological Analysis | | | | |
|---|---|---|---|---|
| Frequency (rad/sec) | Unmodified Resin | Peroxide Modified Resin | Blend with 10% Moisture Cure Polymer | Blend with 20% Moisture Cure Polymer |
| 1.00E+02 | 9.16E+02 | 1.03E+03 | 7.60E+02 | 8.30E+02 |
| 1.00E-01 | 1.88E+04 | 4.12E+04 | 6.59E+04 | 1.44E+05 |
| Viscosity Ratio (V0.1/V100) | 20.5 | 40.2 | 86.8 | 173.5 |

Table 3 shows that at the same loading of the foaming agent, inventive blends of inventive examples (IE) IE-1 and IE-2 achieve foaming levels equivalent or higher compared both the unmodified system as well as the peroxide-modified system (comparative examples (CE)). In addition, for equivalent foaming level (IE-1 vs. CE-2); the inventive blend shows significantly improved mechanical properties. Compared to the peroxide-modified system, the inventive blends show equivalent mechanical properties achieved for higher foaming level (~17% higher). Compared to non-foamed material (CE-1), IE-1 exhibits equivalent mechanical properties while yet being at 14.6% foaming.

**Table 3**

| Foam Properties | | | | | |
|---|---|---|---|---|---|
| **Examples** | **CE-1** | **CE-2** | **CE-3** | **IE-1** | **IE-2** |
| Description | Non-foamed LLDPE | Foamed LLDPE | Peroxide treated foamed LLDPE | Foamed Blend of 10% moisture cured LDPE + LLDPE | Foamed Blend of 20% moisture cured LDPE + LLDPE |
| Tensile strength (MPa) ((psi)) | 14.3 (2077) | 9.74 (1413) | 15.6 (2260) | 15.3 (2216) | 12.0 (1747) |
| Std Dev (Tensile) | 131 | 12 | 133 | 107 | 64 |
| Elongation (%) | 533 | 79 | 530 | 539 | 420 |
| Std Dev (Elongation) | 54 | 31 | 34 | 33 | 23 |
| Density | 0.92 | 0.785 | 0.805 | 0.786 | 0.767 |
| Level of foaming (%) | 0 | 14.6 | 12.5 | 14.6 | 16.6 |

Table 4 presents additional data. Samples were prepared as described above. DFDB-5451 was dried before blending, and for samples including a foaming agent, compounded at a temperature of 150°C.

**Table 4**

| Compositions and Properties | | | | | | | |
|---|---|---|---|---|---|---|---|
| | **Example** | **CE-4** | **CE-5** | **CE-6** | **IE-3** | **CE-7** | **IE-4** |
| **Component Description** | Density | XL SI-LINK | pre-XL | No cat | | | |
| DFH 2065 (LLDPE 0.920 den, 0.65 MI) | 0.920 | | 79.5 | 89.5 | 64.5 | | |
| DFNA-4580 (HDPE, 0.945 den, 0.8MI) | 0.945 | | | | | 99.5 | 84.5 |
| DOWLEX GM 8480F (0.917 den, 3.0 MI) | 0.917 | | | | | | |
| XL-SILINK (EXP-17-AJ4759-1) | | | 20 | | | | |
| DFDA-5451 (Si-LINK VTMS copolymer) | 0.920 | 95 | | 10 | 30 | | 10 |
| DFDB-5480 (Dibutyltin catalyst MB) | 0.920 | 5 | | | 5 | | 5 |
| BI 0340 (49% Azodicarbonamide MB) | | | 0.5 | 0.5 | 0.5 | 0.5 | 0.5 |
| **Total** | | 100 | 100 | 100 | 100 | 100 | 100 |
| | **Cured?** | Yes, see Note 2a | No | No | Yes, see Note 2b | No | Yes, see Note 2b |
| Foam Density (gr/cc) | | | 0.835 | 0.847 | 0.912 | 0.882 | 0.930 |

| | | | **T&E on Jacket** | | | | |
|---|---|---|---|---|---|---|---|
| Tensile Strength @Peak, (MPa) ((psi)) | | | 6.76 (981) | 9.69 (1405) | 13.7 (1988) | 20.4 (2953) | 16.8 (2437) |
| STD on TS | | | 50 | 94 | 205 | 67 | 53 |
| Tensile Elong @ Break, % | | | 16 | 389 | 431 | 9 | 32 |
| STD on %Elong. | | | 5 | 25 | 34 | 1 | 19 |

| | | **Oscillatory Shear Viscosity @180C** | | | | | |
|---|---|---|---|---|---|---|---|
| V100 (Pa-sec) | | | 8.15E+0 2 | 9.67E+0 2 | 5.63E+0 2 | 1.22E+ 03 | 1.27E+ 03 |
| V0.1 (Pa-sec) | | | 7.78E+0 4 | 4.69E+0 4 | 9.32E+0 4 | 2.79E+ 04 | 5.95E+ 04 |
| Ratio V0.1/V100 | | | 95.5 | 48.5 | 165.5 | 22.9 | 46.9 |
| RSI | | | 811.9 | 144.5 | 567.7 | 67.7 | 212.5 |

| | | | | | | | |
|---|---|---|---|---|---|---|---|
| **Note 2a:** Cure pelleted material in 90C water bath for 4 hours (formulation 1 XL SI-LINK only), Dry in convection overnight at 80C before use. **Note 2b:** Cure pelleted material in humidity chamber (50C and 75% RH) for 14 days before extrusion | | | | | | | |

### Results and Discussion

CE-4 is a fully cross-linked, non-foamed system, representing a typical moisture cured silane copolymer. The material was pelletized after compounding then cured as per Note 2a. This compound was prepared for use in CE-5 and is not extrudable by itself since not thermoplastic.

CE-5 is a foamed blend using the thermoplastic LLDPE base resin and 20% of the pre-crosslinked material of CE-4. The compound is shown to exhibit significantly higher V0.1/V100 ratio compared to IE-2 where to crosslinkable component was first mixed with LLDPE matrix prior to the cure step. However, it resulted in a highly inhomogeneous extrudate with very rough surface and very poor mechanical properties as shown by the tensile and elongation data. This a key comparative example demonstrating the importance of first mixing all components in a thermoplastic fashion in the presence of catalyst then subjecting the compound to a crosslinking step prior to final article manufacture.

CE-6 is a foamed thermoplastic blend of LLDPE and 10% wt of the silane copolymer in the absence of the moisture condensation catalyst. This example should be compared to inventive example IE-1 and the difference between the two is clear: (i) the viscosity ratio V0.1/V100 for CE-6 is 48.5 vs. 86.8 for IE-1, an increase of about 1.8X; (ii) the foam density for CE-6 is only 0.847 vs. 0.786 for IE-1, and (iii) the mechanical properties of the foamed material of IE-1 are clearly superior as shown by the Tensile Strength/Tensile Elongation data 2216/539 for IE-1 vs. 1409/389 for CE-6.

IE-3 is a foamed blend of LLDPE and 30% of the silane copolymer compounded in the presence of the catalyst and subject to a moisture cure step prior to extrusion foaming. This inventive example shows better mechanical and rheological properties compared to the unmodified foamed LLDPE of CE-2; and the mechanical properties of IE-3 are comparable to IE-1 and IE-2.

CE-7 is a foamed base HDPE resin without the silane copolymer or catalyst.

IE-4 is a foamed HDPE blend using the base resin of CE-7 and 10% wt. of the silane copolymer, compounded in the presence of catalyst and subject to a moisture cure step prior to extrusion foaming. IE-4 shows a higher V0.1/V100 ratio indicating higher melt strength along with slightly improved mechanical properties of the formed jacket, and points to further optimization for property balance.

## Claims

1. A melt blended composition comprising, in weight percent (wt%) based upon the weight of the composition:
(A) 55 to 94.98 wt% of a thermoplastic polymer, wherein the thermoplastic polymer is a polyolefin,
(B) 5 to 44.98 wt% of a moisture curable polymer, wherein the moisture curable polymer is a silane functionalized polyolefin,
(C) 0.01 to 5 wt% of a moisture condensation catalyst, and
(D) 0.01 to 5 wt% of a foaming agent.

2. The composition of claim 1 in which the thermoplastic polymer is polyethylene.

3. The composition of any of the preceding claims in which the condensation catalyst is a Lewis acid or a Lewis base.

4. The composition of any of the preceding claims in which the condensation catalyst is dibutyl tin dilaurate.

5. The composition of any of the preceding claims in which the condensation catalyst is sulfonic acid.

6. The composition of any of the preceding claims in which the foaming agent is chemical foaming agent.

7. The composition of any of the preceding claims in which the foaming agent is a physical foaming agent.

8. The composition of any of the preceding claims in which the foaming agent comprises carbon dioxide or nitrogen.

9. A crosslinked composition of any of the preceding claims.

10. A wire or cable sheath comprising the composition of any of the preceding claims.

11. A wire or cable comprising the sheath of claim 10.

## Patentansprüche

1. Schmelzgemischte Zusammensetzung, umfassend in Gewichtsprozent (Gew.-%) basierend auf dem Gewicht der Zusammensetzung:
(A) zu 55 bis 94,98 Gew.-% ein thermoplastisches Polymer, wobei das thermoplastische Polymer ein Polyolefin ist,
(B) zu 5 bis 44,98 Gew.-% ein feuchtigkeitshärtbares Polymer, wobei das feuchtigkeitshärtbare Polymer ein silanfunktionalisiertes Polyolefin ist,
(C) zu 0,01 bis 5 Gew.-% einen Feuchtigkeitskondensationskatalysator und
(D) zu 0,01 bis 5 Gew.-% einen Schaumbildner.

2. Zusammensetzung nach Anspruch 1, wobei das thermoplastische Polymer Polyethylen ist.

3. Zusammensetzung nach einem der vorstehenden Ansprüche, wobei der Kondensationskatalysator eine Lewis-Säure oder eine Lewis-Base ist.

4. Zusammensetzung nach einem der vorstehenden Ansprüche, wobei der Kondensationskatalysator Dibutylzinndilaurat ist.

5. Zusammensetzung nach einem der vorstehenden Ansprüche, wobei der Kondensationskatalysator Sulfonsäure ist.

6. Zusammensetzung nach einem der vorstehenden Ansprüche, wobei der Schaumbildner ein chemischer Schaumbildner ist.

7. Zusammensetzung nach einem der vorstehenden Ansprüche, wobei der Schaumbildner ein physikalischer Schaumbildner ist.

8. Zusammensetzung nach einem der vorstehenden Ansprüche, wobei der Schaummittel Kohlendioxid oder Stickstoff umfasst.

9. Vernetzte Zusammensetzung nach einem der vorstehenden Ansprüche.

10. Draht oder Kabelummantelung, umfassend die Zusammensetzung nach einem der vorstehenden Ansprüche.

11. Draht oder Kabel, umfassend die Ummantelung nach Anspruch 10.

## Revendications

1. Composition mélangée fondue comprenant en pourcentage en poids (% en poids) sur la base du poids de la composition :
(A) de 55 à 94,98 % en poids d'un polymère thermoplastique, dans laquelle le polymère thermoplastique
est une polyoléfine,
(B) de 5 à 44,98 % en poids d'un polymère durcissable à l'humidité, dans laquelle le polymère durcissable
à l'humidité est une polyoléfine fonctionnalisée par silane,
(C) de 0,01 à 5 % en poids d'un catalyseur de condensation d'humidité, et
(D) de 0,01 à 5 % en poids d'un agent moussant.

2. Composition selon la revendication 1, dans laquelle le polymère thermoplastique est du polyéthylène.

3. Composition selon l'une quelconque des revendications précédentes, dans laquelle le catalyseur
de condensation est un acide de Lewis ou une base de Lewis.

4. Composition selon l'une quelconque des revendications précédentes, dans laquelle le catalyseur
de condensation est du dilaurate de dibutyle et d'étain.

5. Composition selon l'une quelconque des revendications précédentes, dans laquelle le catalyseur
de condensation est de l'acide sulfonique.

6. Composition selon l'une quelconque des revendications précédentes, dans laquelle l'agent moussant est de l'agent moussant chimique.

7. Composition selon l'une quelconque des revendications précédentes, dans laquelle l'agent moussant est
un agent moussant physique.

8. Composition selon l'une quelconque des revendications précédentes, dans laquelle l'agent moussant comprend du dioxyde de carbone ou de l'azote.

9. Composition réticulée selon l'une quelconque des revendications précédentes.

10. Gaine de fil ou de câble comprenant la composition selon l'une quelconque des revendications précédentes.

11. Fil ou câble comprenant la gaine selon la revendication 10.
